# EUROPEAN PATENT SPECIFICATION

(11) **EP 3 619 997 B1**
(45) Date of publication and mention of the grant of the patent: **18.01.2023**
(21) Application number: 17908559.2
(22) Date of filing: 05.05.2017
(51) Int. Cl.: H04W 72/04, H04L 5/00

(54) **PHYSICAL CONTROL CHANNEL STRUCTURE**
AUFBAU EINES PHYSIKALISCHEN STEUERKANALS
STRUCTURE DE CANAL DE COMMANDE PHYSIQUE

(43) Date of publication of application: 11.03.2020
(60) Divisional application: 22210659.3
(73) Proprietor: Motorola Mobility LLC, Chicago, IL 60654 (US)
(72) Inventor: LI, Hongchao, Beijing 100085 (CN); JUNG, Hyejung, Palatine, Illinois 60067 (US); NANGIA, Vijay, Woodridge, Illinois 60517 (US)
(74) Representative: Openshaw & Co.
(86) International application number: PCT/CN2017/083218
(87) International publication number: WO 2018/201446

(56) References cited:
- WO-A1-2016/064048
- GUANGDONG OPPO MOBILE TELECOM: "Slot aggregation and configuration for NR long PUCCH", 3GPP DRAFT; R1-1704623, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, Washington, USA; 20170403 - 20170407 24 March 2017 (2017-03-24), XP051250536, Retrieved from the Internet: URL:http://www.3gpp.org/ftp/tsg_ran/WG1_RL 1/TSGR1_88b/Docs/ [retrieved on 2017-03-24]
- CATT: "Short PUCCH structure", 3GPP DRAFT; R1-1700199, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051207739, Retrieved from the Internet: URL:http://www.3gpp.org/ftp/Meetings_3GPP_ SYNC/RAN1/Docs/ [retrieved on 2017-01-16]
- Intel Corporation: "Long PUCCH design aspects", 3GPP TSG RAN WG1 Meeting #88bis R1-1705031, 25 March 2017 (2017-03-25), XP051251706, Spokane, USA
- Guangdong OPPO Mobile Telecom: "Multiplexing of short PUCCH and long PUCCH", 3GPP TSG RAN WG1 Meeting#88bis R1-1704622, 25 March 2017 (2017-03-25), XP051251373, Spokane, USA
- ERICSSON: "On two-symbol short PUCCH", 3GPP TSG RAN WG1 Meeting #88 R1-1703293, 7 February 2017 (2017-02-07), XP051221918, Athens, Greece
- HUAWEI, HISILICON: "Long duration PUCCH design", 3GPP TSG RAN WG1 Meeting #88 R1-1701647, 7 February 2017 (2017-02-07), XP051220839, Athens, Greece

## Description

### FIELD

The subject matter disclosed herein relates generally to wireless communications and more particularly relates to a physical control channel structure.

### BACKGROUND

The following abbreviations are herewith defined, at least some of which are referred to within the following description: Third Generation Partnership Project ("3GPP"), Positive-Acknowledgment ("ACK"), Binary Phase Shift Keying ("BPSK"), Clear Channel Assessment ("CCA"), Cyclic Prefix ("CP"), Channel State Information ("CSI"), Common Search Space ("CSS"), Discrete Fourier Transform Spread ("DFTS"), Downlink Control Information ("DCI"), Downlink ("DL"), Downlink Pilot Time Slot ("DwPTS"), Enhanced Clear Channel Assessment ("eCCA"), Enhanced Mobile Broadband ("eMBB"), Evolved Node B ("eNB"), European Telecommunications Standards Institute ("ETSI"), Frame Based Equipment ("FBE"), Frequency Division Duplex ("FDD"), Frequency Division Multiple Access ("FDMA"), Guard Period ("GP"), Hybrid Automatic Repeat Request ("HARQ"), Internet-of-Things ("IoT"), Licensed Assisted Access ("LAA"), Load Based Equipment ("LBE"), Listen-Before-Talk ("LBT"), Long Term Evolution ("LTE"), Multiple Access ("MA"), Modulation Coding Scheme ("MCS"), Machine Type Communication ("MTC"), Multiple Input Multiple Output ("MIMO"), Multi User Shared Access ("MUSA"), Narrowband ("NB"), Negative-Acknowledgment ("NACK") or ("NAK"), Next Generation Node B ("gNB"), Non-Orthogonal Multiple Access ("NOMA"), Orthogonal Frequency Division Multiplexing ("OFDM"), Primary Cell ("PCell"), Physical Broadcast Channel ("PBCH"), Physical Downlink Control Channel ("PDCCH"), Physical Downlink Shared Channel ("PDSCH"), Pattern Division Multiple Access ("PDMA"), Physical Hybrid ARQ Indicator Channel ("PHICH"), Physical Random Access Channel ("PRACH"), Physical Resource Block ("PRB"), Physical Uplink Control Channel ("PUCCH"), Physical Uplink Shared Channel ("PUSCH"), Quality of Service ("QoS"), Quadrature Phase Shift Keying ("QPSK"), Radio Resource Control ("RRC"), Random Access Procedure ("RACH"), Random Access Response ("RAR"), Reference Signal ("RS"), Resource Spread Multiple Access ("RSMA"), Round Trip Time ("RTT"), Receive ("RX"), Sparse Code Multiple Access ("SCMA"), Scheduling Request ("SR"), Single Carrier Frequency Division Multiple Access ("SC-FDMA"), Secondary Cell ("SCell"), Shared Channel ("SCH"), Signal-to-Interference-Plus-Noise Ratio ("SINR"), System Information Block ("SIB"), Transport Block ("TB"), Transport Block Size ("TBS"), Time-Division Duplex ("TDD"), Time Division

Multiplex ("TDM"), Transmission Time Interval ("TTI"), Transmit ("TX"), Uplink Control Information ("UCI"), User Entity/Equipment (Mobile Terminal) ("UE"), Uplink ("UL"), Universal Mobile Telecommunications System ("UMTS"), Uplink Pilot Time Slot ("UpPTS"), Ultra-reliability and Low-latency Communications ("URLLC"), and Worldwide Interoperability for Microwave Access ("WiMAX"). As used herein, "HARQ-ACK" may represent collectively the Positive Acknowledge ("ACK") and the Negative Acknowledge ("NACK"). ACK means that a TB is correctly received while NACK (or NAK) means a TB is erroneously received.

In certain wireless communications networks, a high carrier frequency (e.g., >6GHz) may be used, such as millimeter wave. In some networks, long PUCCH and short PUCCH may be supported. In such networks, transmitting and/or receiving devices may have challenges handling long PUCCH and short PUCCH. R1-1704623 discloses slot aggregation and configuration for NR long PUCCH and R1-1700199 discloses a short PUCCH structure.

### BRIEF SUMMARY

The object of the invention is achieved by the subject-matter of the independent claims. The dependent claims describe advantageous embodiments. The scope of protection of the invention is solely limited by the appended claims.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for handling a physical control channel structure;
Figure 2 is a schematic block diagram illustrating one embodiment of an apparatus that may be used for handling a physical control channel structure;
Figure 3 is a schematic block diagram illustrating one embodiment of an apparatus that may be used for handling a physical control channel structure;
Figure 4 is a schematic block diagram illustrating one embodiment of truncating symbols;
Figure 5 is a schematic block diagram illustrating another embodiment of truncating symbols;
Figure 6 is a schematic block diagram illustrating one embodiment of a PUCCH component;
Figure 7 is a schematic block diagram illustrating another embodiment of a PUCCH component;
Figure 8 is a schematic block diagram illustrating one embodiment of a combination of PUCCH components;
Figure 9 is a schematic block diagram illustrating another embodiment of a combination of PUCCH components;
Figure 10 is a schematic block diagram illustrating a further embodiment of a combination of PUCCH components;
Figure 11 is a schematic block diagram illustrating yet another embodiment of a combination of PUCCH components;
Figure 12 is a schematic flow chart diagram illustrating one embodiment of a method for transmitting feedback;
Figure 13 is a schematic flow chart diagram illustrating one embodiment of a method for transmitting components; and
Figure 14 is a schematic flow chart diagram illustrating another embodiment of a method for transmitting components.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-largescale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

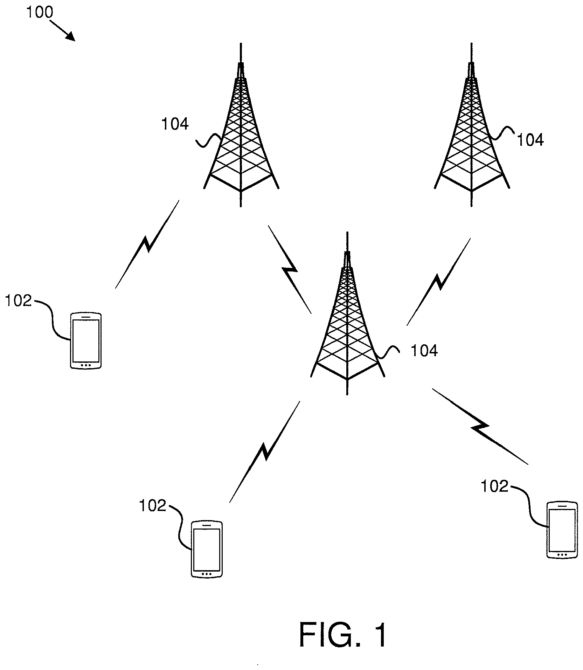

Figure 1 depicts an embodiment of a wireless communication system 100 for handling a physical control channel structure. In one embodiment, the wireless communication system 100 includes remote units 102 and base units 104. Even though a specific number of remote units 102 and base units 104 are depicted in Figure 1, one of skill in the art will recognize that any number of remote units 102 and base units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the base units 104 via UL communication signals.

The base units 104 may be distributed over a geographic region. In certain embodiments, a base unit 104 may also be referred to as an access point, a transmission/reception point ("TRP"), an access terminal, a base, a base station, a Node-B, an eNB, a gNB, a Home Node-B, a relay node, a device, or by any other terminology used in the art. The base units 104 are generally part of a radio access network that includes one or more controllers communicably coupled to one or more corresponding base units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with the 3GPP protocol, wherein the base unit 104 transmits using an OFDM modulation scheme on the DL and the remote units 102 transmit on the UL using a SC-FDMA scheme or an OFDM scheme. More generally, however, the wireless communication system 100 may implement some other open or proprietary communication protocol, for example, WiMAX, among other protocols. The present disclosure is not intended to be limited to the implementation of any particular wireless communication system architecture or protocol.

The base units 104 may serve a number of remote units 102 within a serving area, for example, a cell or a cell sector via a wireless communication link. The base units 104 transmit DL communication signals to serve the remote units 102 in the time, frequency, and/or spatial domain.

In one embodiment, a remote unit 102 may transmit messages on an uplink control channel to a base unit 104. In certain embodiments, the uplink control channel includes multiple components, and each component of the multiple components includes a predetermined format indicating a time domain duration, a frequency bandwidth, a reference signal density, a reference signal pattern, a payload size, and an uplink control information type. Accordingly, a remote unit 102 may be used for handling a physical control channel structure.

In certain embodiments, a base unit 104 may receive messages on an uplink control channel from a remote unit 102. In certain embodiments, the uplink control channel includes multiple components, and each component of the multiple components includes a predetermined format indicating a time domain duration, a frequency bandwidth, a reference signal density, a reference signal pattern, a payload size, and an uplink control information type. Accordingly, a base unit 104 may be used for handling a physical control channel structure.

In one embodiment, a remote unit 102 may receive a downlink data transmission. In certain embodiments, the remote unit 102 may determine whether feedback is to be transmitted on a short control channel or a long control channel in response to receiving the downlink data transmission. In some embodiments, the remote unit 102 may transmit the feedback on symbols near an end of the short control channel in response to the feedback being determined to be transmitted on the short control channel. In various embodiments, the remote unit 102 may transmit the feedback on symbols near a beginning of the long control channel in response to the feedback being determined to be transmitted on the long control channel. Accordingly, a remote unit 102 may be used for handling a physical control channel structure.

As used herein, "symbol" may correspond to an OFDM, or DFT-SOFDM/SC-FDMA symbol. In various embodiments, short PUCCH or short control channel may correspond to PUCCH transmission in short duration, while long PUCCH or long control channel may correspond to PUCCH transmission in long duration. The number of symbols in the long duration may be larger than the number of symbols in the short duration.

In one embodiment, a remote unit 102 may receive a downlink data transmission. In some embodiments, the remote unit 102 may transmit feedback corresponding to the downlink data transmission on a first component of a long control channel, wherein the long control channel includes the first component and a second component, the first component includes a first number of symbols, and the second component includes a second number of symbols. In various embodiments, the remote unit 102 may transmit uplink control information other than the feedback on the second component, wherein the first component and the second component are temporally adjacent. Accordingly, a remote unit 102 may be used for handling a physical control channel structure.

In one embodiment, a remote unit 102 may determine a composite component formed from a first component and a second component, wherein a number of symbols of the composite component is less than a sum of a number of symbols of the first component and a number of symbols of the second component. In certain embodiments, the remote unit 102 may transmit the composite component on a long control channel. Accordingly, a remote unit 102 may be used for handling a physical control channel structure.

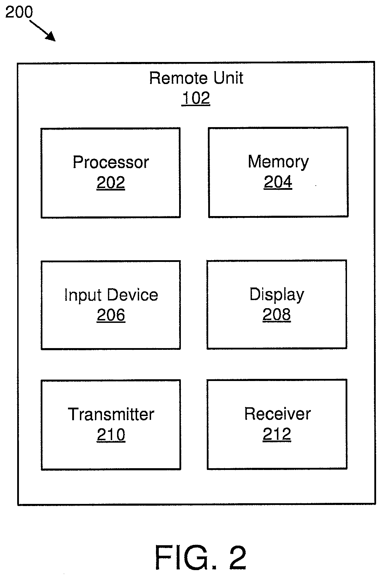

Figure 2 depicts one embodiment of an apparatus 200 that may be used for handling a physical control channel structure. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. In various embodiments, the processor 202 may determine whether feedback is to be transmitted on a short control channel or a long control channel in response to receiving the downlink data transmission. In certain embodiments, the processor 202 may determine a composite component formed from a first component and a second component, wherein a number of symbols of the composite component is less than a sum of a number of symbols of the first component and a number of symbols of the second component. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 stores data relating to transmissions. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, an LCD display, an LED display, an OLED display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

The transmitter 210 is used to provide UL communication signals to the base unit 104 and the receiver 212 is used to receive DL communication signals from the base unit 104. In certain embodiments, the transmitter 210 may be used transmit messages on an uplink control channel. In certain embodiments, the uplink control channel includes multiple components, and each component of the multiple components includes a predetermined format indicating a time domain duration, a frequency bandwidth, a reference signal density, a reference signal pattern, a payload size, and an uplink control information type. In some embodiments, the receiver 212 may receive a downlink data transmission. In various embodiments, the transmitter 210 may transmit feedback on symbols near an end of a short control channel in response to the feedback being determined to be transmitted on the short control channel. In certain embodiments, the transmitter 210 may transmit feedback on symbols near a beginning of a long control channel in response to the feedback being determined to be transmitted on the long control channel.

In one embodiment, the transmitter 210 may transmit feedback corresponding to a downlink data transmission on a first component of a long control channel, wherein the long control channel includes a first component and a second component, the first component includes a first number of symbols, and the second component includes a second number of symbols. In various embodiments, the transmitter 210 may transmit uplink control information other than the feedback on a second component, wherein a first component and a second component are temporally adjacent. In some embodiments, the transmitter 210 may transmit a composite component on a long control channel. Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

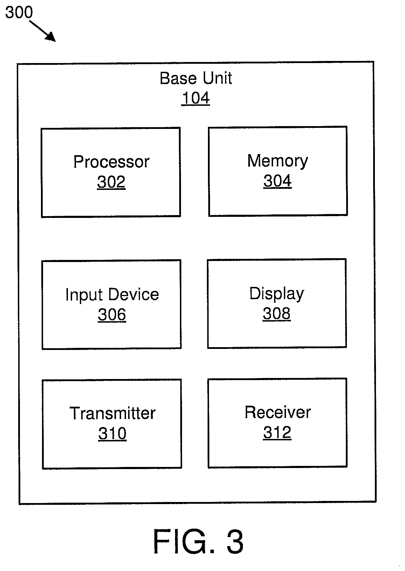

Figure 3 depicts one embodiment of an apparatus 300 that may be used for handling a physical control channel structure. The apparatus 300 includes one embodiment of the base unit 104. Furthermore, the base unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In various embodiments, the receiver 312 is used to receive messages on an uplink control channel. In certain embodiments, the uplink control channel includes multiple components, and each component of the multiple components includes a predetermined format indicating a time domain duration, a frequency bandwidth, a reference signal density, a reference signal pattern, a payload size, and an uplink control information type. Although only one transmitter 310 and one receiver 312 are illustrated, the base unit 104 may have any suitable number of transmitters 310 and receivers 312. The transmitter 310 and the receiver 312 may be any suitable type of transmitters and receivers. In one embodiment, the transmitter 310 and the receiver 312 may be part of a transceiver.

In various embodiments, there may be two types of long duration PUCCH. One type of long duration PUCCH may have a small to medium sized payload (e.g., 1 to tens of bits). In certain embodiments, to enhance coverage and multiplexing capacity of remote units 102, a sequence-based structure with time spreading and frequency domain resource hopping may be used. Another type of long duration PUCCH may have a large payload (e.g., hundreds of bits). In some embodiments, a long duration PUCCH with a large payload may support channel encoding with polar code or block code and/or repetition and frequency hopping.

In certain embodiments, a long PUCCH may include one PUCCH component or multiple PUCCH components concatenated together to facilitate scalability and/or flexibility. In various embodiments, the concatenation may be continuous or discontinuous (e.g., across dynamic TDD slots) in a time domain. In some embodiments, frequency hopping may be supported to facilitate frequency diversity gain. In certain embodiments, for some concatenations, time domain spreading with orthogonal cover code ("OCC") within a hop dwell time may be used to increase a number of multiplexed remote units 102.

In some embodiments, each PUCCH component out of multiple PUCCH components may use one of a predefined format. In certain embodiments, a set of PUCCH component formats may be defined based on: a time domain duration (e.g., 2, 3, or 4 OFDM symbols); a frequency bandwidth (e.g., PRB numbers); an RS density (e.g., which may be numerology dependent); an RS pattern setting (e.g., which may be numerology dependent); a payload size; an UCI type that is carried (e.g., SR, HARQ ACK/NACK, or CSI report). In various embodiments, a certain PUCCH component format may be numerology dependent. For example, for larger subcarrier spacing, an RS density in a time domain may be lower than that of formats with smaller subcarrier spacing.

In one embodiment, from a remote unit's 102 point of view, PUCCH components with the same or different formats and/or with the same or different information may concatenate as a long PUCCH. In some embodiments, for coverage enhancement or multi-beam sweeping, each component may carry the same information with the same format spread in time domain. In certain embodiments, for flexible support of DL MIMO, carrier aggregation ("CA") and dual connectivity ("DC"), each component may use the same or different format to carry different UCI. In various embodiments, a priority order may be predefined or configured for each component (e.g., { SR + CSI + ACK/NACK } for self-contained scenario, { ACK/NACK + SR + CSI } for non-self-contained and fast ACK/NACK feedback).

In one embodiment, for each remote unit 102, the sequences for UCI bits modulation and RS may be associated with a remote unit 102 identification ("ID") or radio network temporary identifier ("RNTI"). In certain embodiments, a sequence length may be equal to a number of subcarriers of a used PUCCH component. In various embodiments, different remote units 102 may be enabled to share a same sequence if allocated to transmit PUCCH in different slots. In some embodiments, different remote units 102 with different sequences may be code division multiplexed in certain symbols in response to using a same frequency resource.

In various embodiments, to facilitate orthogonality between PUCCH components from different remote units 102, PUCCH symbols from different remote units 102 with a same sequence length may be designed to be orthogonal and PUCCH symbols and RS from different remote units 102 with a same sequence length may be designed to be orthogonal.

In certain embodiments that use dynamic TDD, a usable number of OFDM symbols for long PUCCH may change from slot to slot. In some embodiments, a last PUCCH component of a long PUCCH may be truncated at an end of a slot. In various embodiments, some symbols may be dynamically allocated to a DL part or gap (e.g., used for DL to UL switching), or even SRS in the current slot #N, while the ACK/NACK and CSI feedback payloads may be determined by the slots before #N from #(N-k1) to #(N-k2). In such embodiments, a last PUCCH component may be truncated at slot #N and continues to transmit in the UL part of next slot #(N+1). In certain embodiments, if a rest/vacant symbol number, or number of remaining symbols that would remain after truncation, is smaller than a certain value, a last PUCCH component at a slot #N may be given up or dropped and its resource may be given to a second last PUCCH component. In some embodiments, some information bits that may have been carried by a last PUCCH component may be carried by OFDM/SC-FDMA symbols that are aggregated to a second last PUCCH component. In various embodiments, if a rest/vacant symbol number or number of remaining symbols that would remain after truncation is larger than a certain value, a last PUCCH component may be truncated to keep some symbols with RS and information bits at slot #N. For example, a last PUCCH component that was supposed to have 3 OFDM symbols may be truncated to 2 symbols. In such an example, rest information bits may be transmitted at the UL part of slot#(N+1). In some embodiments, RS may be added in front to form another complete PUCCH component. To continue with the former example, a new PUCCH component with 1 symbol RS and 1 symbol PUCCH may be used to carry the rest information bits. In various embodiments, PUCCH components may carry the same and/or different UCI bits.

As described herein, a scalable payload may be achieved via flexible concatenation of PUCCH components that may be applicable to long PUCCH across slots. In certain embodiments, each PUCCH component may encode UCI individually, which may depend on a target use and/or scenario. In various embodiments, it may be avoided for long PUCCH to couple a PUCCH format with fixed UCI types and payload bits number. In certain embodiments, a new PUCCH format may not have to be generated each time whenever tackling new functions or uses. In some embodiments, a scalable design may support forward compatibility by flexibly using well designed PUCCH component candidates. In one embodiment, a resource allocation mechanism may be sufficiently flexible to carry necessary UCI bits.

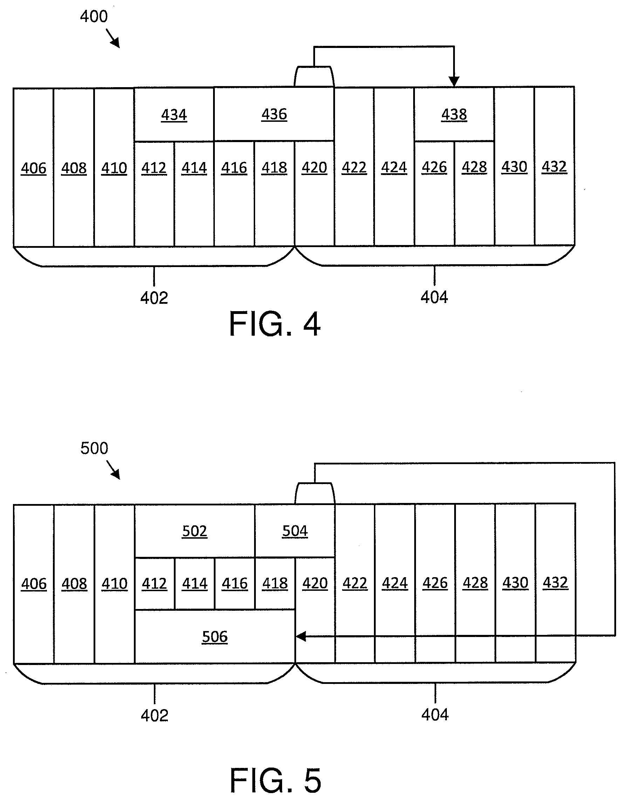

Figure 4 is a schematic block diagram illustrating one embodiment of truncating symbols. A frame 400 is illustrated including a first slot 402 (e.g., Slot #N) and a second slot 404 (e.g., Slot #N+1). The first slot 402 includes symbols 406, 408, 410, 412, 414, 416, and 418. The second slot 404 includes symbols 420, 422, 424, 426, 428, 430, and 432. The symbols 406, 408, 420, and 422 are downlink symbols. Moreover, the symbols 410 and 424 are guard period symbols. Further, the symbols 412, 414, 416, 418, 426, 428, 430, and 432 are uplink symbols. As illustrated, in Slot #N (e.g., the first slot 402) the usable UL OFDM/SC-FDMA symbol number is 4 (symbols 412, 414, 416, and 418), but a configured long PUCCH is concatenated with a first PUCCH component 434 with 2 symbols and a second PUCCH component 436 with 3 symbols which combined is 5 symbols and is too large for the first slot 402. Thereby the second PUCCH component 436 with 3 OFDM/SC-FDMA symbols may be truncated due to the UL symbol amount shortage and only the first two symbols of the second PUCCH component 436 are mapped to the last part of Slot #N. The rest of the UCI in the last symbol of the second PUCCH component 436 are then moved and carried by a short PUCCH (e.g., a third PUCCH component 438) in the Slot #N+1 (e.g., the second slot 404) or by a first PUCCH component of a long PUCCH starting in the Slot #N+1 (e.g., the third PUCCH component 438).

Figure 5 is a schematic block diagram illustrating another embodiment of truncating symbols. A frame 500 is illustrated including the first slot 402 (e.g., Slot #N) and the second slot 404 (e.g., Slot #N+1). The first slot 402 includes the symbols 406, 408, 410, 412, 414, 416, and 418. The second slot 404 includes the symbols 420, 422, 424, 426, 428, 430, and 432. The symbols 406, 408, 420, and 422 are downlink symbols. Moreover, the symbols 410 and 424 are guard period symbols. Further, the symbols 412, 414, 416, 418, 426, 428, 430, and 432 are uplink symbols. As illustrated, in Slot #N (e.g., the first slot 402) the usable UL OFDM/SC-FDMA symbol number is 4 (symbols 412, 414, 416, and 418), but a configured long PUCCH is concatenated with a first PUCCH component 502 with 3 symbols and a second PUCCH component 504 with 2 symbols. Thereby the second PUCCH component 504 with 2 OFDM/SC-FDMA symbols is truncated due to the UL symbol amount shortage. An RS symbol of either the first or second PUCCH components 502 and 504 may be removed and the symbol with UCI payloads is aggregated into the previous PUCCH component, which originally is a 3-symbol component and now a 4-symbol component 506. In other words, the first and/or second PUCCH components 502 and 504 are truncated into the 4-symbol component 506 so that the first and/or second PUCCH components 502 and 504 are not needed.

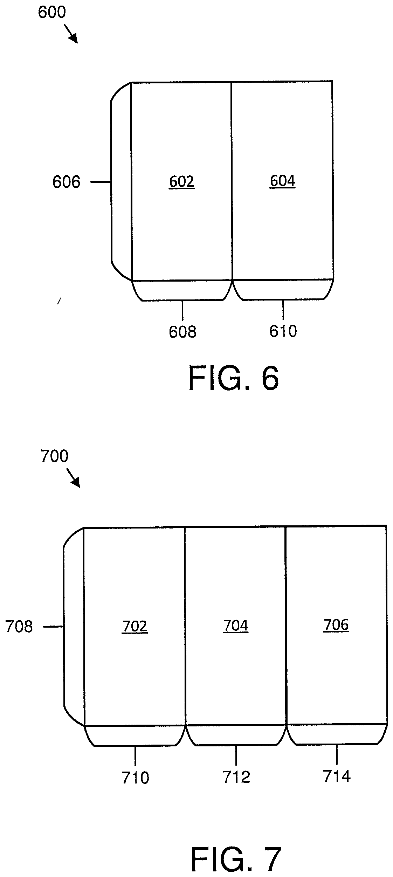

Figure 6 is a schematic block diagram illustrating one embodiment of a PUCCH component 600. The PUCCH component 600 includes a first element 602 and a second element 604. The first and second elements 602 and 604 use a number 606 of RBs (e.g., 1). The first element 602 is an OFDM/SC-FDMA symbol 608 and the second element 604 is an OFDM/SC-FDMA symbol 610. In one embodiment, the first element 602 may be a RS and the second element 604 may be data. In another embodiment, the first element 602 may be data and the second element 604 may be a RS. In a further embodiment, the first element 602 may be data and the second element 604 may be data.

Figure 7 is a schematic block diagram illustrating another embodiment of a PUCCH component 700. The PUCCH component 700 includes a first element 702, a second element 704, and a third element 706. The first, second, and third elements 702, 704, and 706 use a number 708 of RBs (e.g., 1). The first element 702 is an OFDM/SC-FDMA symbol 710, the second element 704 is an OFDM/SC-FDMA symbol 712, and the third element 706 is an OFDM/SC-FDMA symbol 714. In one embodiment, the first element 702 may be a RS, the second element 704 may be data, and the third element 706 may be data. In another embodiment, the first element 702 may be data, the second element 704 may be a RS, and the third element 706 may be data. In a further embodiment, the first element 702 may be data, the second element 704 may be data, and the third element 706 may be a RS. In yet another embodiment, the first element 702 may be data, the second element 704 may be data, and the third element 706 may be data.

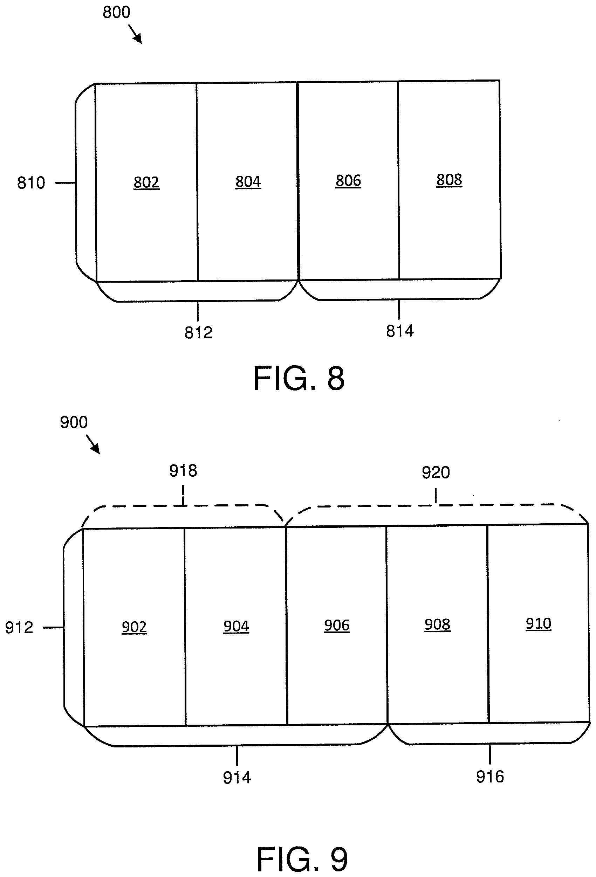

Figure 8 is a schematic block diagram illustrating one embodiment of a combination of PUCCH components. A combination PUCCH component 800 of length-4 symbols or NR-PUCCH of duration 4 symbols may be formed by concatenation of two length-2 symbols PUCCH components, as illustrated. The combination PUCCH component 800 includes a first symbol 802, a second symbol 804, a third symbol 806, and a fourth symbol 808. The first, second, third, and fourth symbols 802, 804, 806, and 808 use a number 810 of RBs (e.g., 1). A first component 812 includes the first symbol 802 and the second symbol 804. Moreover, a second component 814 includes the third symbol 806 and the fourth symbol 808. Each of the first and second components 812 and 814 may have one of the configurations described in Figure 6. For example, the first symbol 802 may be a RS, the second symbol 804 may be data, the third symbol 806 may be a RS, and the fourth symbol 808 may be data. In another example, the first symbol 802 may be data, the second symbol 804 may be a RS, the third symbol 806 may be a RS, and the fourth symbol 808 may be data. In a further example, the first symbol 802 may be a RS, the second symbol 804 may be data, the third symbol 806 may be data, and the fourth symbol 808 may be data. As may be appreciated, other possibilities for the combination PUCCH component 800 exist.

In certain embodiments, the combination PUCCH component 800 having first a RS and second data for each component (e.g., RS, data, RS, data) may be useful when different UCI types are mapped on the different 2-symbol PUCCH components (e.g., the first and second components 812 and 814), such as HARQ-ACK and/or SR is mapped on the first component 812, and other UCI such as channel quality indicator ("CQI")/ precoding matrix indicator ("PMI"), rank indicator ("RI"), precoding type indicator ("PTI"), channel state information resource indicator ("CRI") is mapped to the second component 814. Each UCI type may be separately channel coded. This combination of 2-symbol PUCCH components may be useful when frequency hopping is enabled for PUCCH, with frequency hopping at the PUCCH component boundaries. For example, a first PUCCH component transmitted on a first set of PRBs (e.g., set including 1 PRB) and a second PUCCH component transmitted on a second set of PRBs, the second set of PRBs being different than the first set of PRBs.

In some embodiments, the combination PUCCH component 800 may be formed by concatenation of the first component 812 having data and RS, and the second component 814 having RS and data (e.g., data, RS, RS, data). Such a combination may be useful if a UCI such as HARQ-ACK is transmitted on both the data symbols with time-domain orthogonal cover code ("OCC") applied to either or both the data and RS symbols to increase the multiplexing capacity of PUCCH - multiplex larger number of UEs.

In various embodiments, the combination PUCCH component 800 may be formed by concatenation of the first component 812 having RS and data, and the second component 814 having data and data (e.g., RS, data, data, data). Such a combination may be useful for large payload UCI transmission such as CQI/PMI. In another example, PUCCH (component) of length-4 symbols may be formed by extending a length-3 PUCCH component with another data symbol at the end. Such a length-4 PUCCH symbol may be used to transmit large payload UCI such as CQI/PMI.

Figure 9 is a schematic block diagram illustrating another embodiment of a combination of PUCCH components. A combination PUCCH component 900 of length-5 symbols or NR-PUCCH of duration 5 symbols may be formed by concatenation of one length-2 symbol PUCCH component and one length-3 symbol PUCCH component, as illustrated. The combination PUCCH component 900 includes a first symbol 902, a second symbol 904, a third symbol 906, a fourth symbol 908, and a fifth symbol 910. The first, second, third, fourth, and fifth symbols 902, 904, 906, 908, and 910 use a number 912 of RBs (e.g., 1). In one embodiment, a first component 914 includes the first symbol 902, the second symbol 904, and the third symbol 906. Moreover, in such an embodiment, a second component 916 includes the fourth symbol 908 and the fifth symbol 910. The first component 914 may have one of the configurations described in Figure 6 and the second component 916 may have one of the configurations described in Figure 7. In another embodiment, a first component 918 includes the first symbol 902 and the second symbol 904. Moreover, in such an embodiment, a second component 920 includes the third symbol 906, the fourth symbol 908, and the fifth symbol 910. The first component 918 may have one of the configurations described in Figure 6 and the second component 920 may have one of the configurations described in Figure 7. For example, the first symbol 902 may be a RS, the second symbol 904 may be data, the third symbol 906 may be data, the fourth symbol 908 may be a RS, and the fifth symbol 910 may be data. In another example, the first symbol 902 may be data, the second symbol 904 may be a RS, the third symbol 906 may be data, the fourth symbol 908 may be a RS, and the fifth symbol 910 may be data. As may be appreciated, other possibilities for the combination PUCCH component 900 exist.

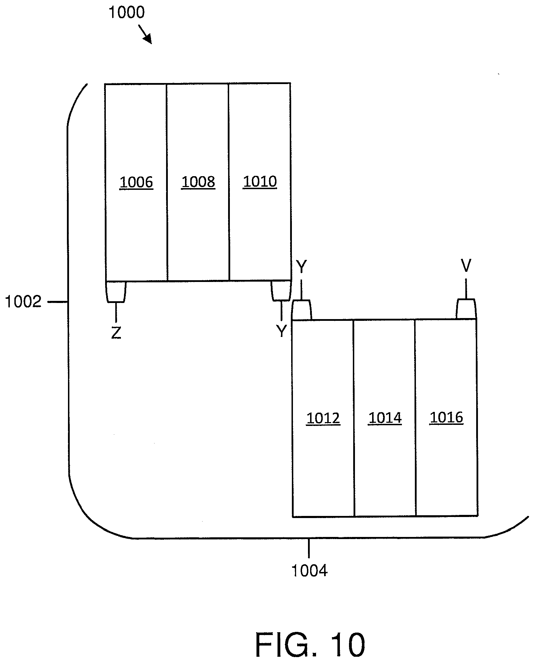

Figure 10 is a schematic block diagram illustrating a further embodiment of a combination of PUCCH components. A combination PUCCH component 1000 (e.g., NR-PUCCH) with 6 symbol duration (formed from two length-3 PUCCH components as described in Figure 7) with frequency hopping is illustrated. The combination PUCCH component 1000 is transmitted over a frequency 1002 and a time 1004. The combination PUCCH component 1000 includes a first symbol 1006, a second symbol 1008, and a third symbol 1010 transmitted over a first PRB (e.g., PRB 40), and a fourth symbol 1012, a fifth symbol 1014, and a sixth symbol 1016 transmitted over a second PRB (e.g., PRB 5). A dwell period may be defined as a time duration over which a time-frequency transmission resource and/or a transmission power does not change. For example, the duration of the first, second, and third symbols 1006, 1008, and 1010 transmitted over the first PRB corresponds to one dwell period. Similarly, the duration of the fourth, fifth, and sixth symbols 1012, 1014, and 1016 transmitted over the second PRB corresponds to another dwell period. The first, second, third, fourth, fifth, and sixth symbols 1006, 1008, 1010, 1012, 1014, and 1016 use a number of RBs (e.g., 1). In one embodiment, a first component includes the first symbol 1006, the second symbol 1008, and the third symbol 1010. Moreover, a second component includes the fourth symbol 1012, the fifth symbol 1014, and the sixth symbol 1016. The first and second components may have one of the configurations described in Figure 7. For example, the first symbol 1006 may be data, the second symbol 1008 may be a RS, the third symbol 1010 may be data, the fourth symbol 1012 may be data, the fifth symbol 1014 may be a RS, and the sixth symbol 1016 may be data. As may be appreciated, other possibilities for the combination PUCCH component 1000 exist.

Figure 10 also shows possible transient periods (e.g., due to frequency hopping and/or change in PRB allocation, and/or change in transmit power, settling time needed for hardware time). Transient periods Z, V, and Y (e.g., Z >= Y, and V >= Y) may be different with Z > Y, and V > Y depending on the presence of critical signals (e.g., such as sounding reference signal "SRS") before or after the PUCCH transmission. In one embodiment, Z = V. In another embodiment, the value of Z is different than the value of V. Depending on the transient period duration and subcarrier spacing for PUCCH or OFDM/SC-FDMA symbol length, the fraction of the transient period duration may be a significant portion of the OFDM/SC-FDMA symbol length. As a result, it may be better for the transient duration to overlap the data symbols in response to the number of data symbols being more than the number of RS symbols to minimize the error floor due to channel estimation degradation on the RS symbol. Other length PUCCH may be generated similarly by concatenation of two or more smaller length PUCCH components.

One or more PUCCH components may be used to transmit a type of UCI information. For example, HARQ-ACK may be mapped to one PUCCH component if other UCI also needs to be transmitted in the same PUCCH, otherwise HARQ-ACK may be mapped to all PUCCH components in no other UCI is transmitted in the PUCCH. In some examples, each UCI type may be separately channel-coded. In some other examples, some UCI types may be jointchannel coded and possibly interleaved and mapped across multiple PUCCH components.

The order of the concatenation of the PUCCH components may be based on one or more various factors that follow.

First factor: type of UCI - HARQ-ACK, CQI/PMI, RI, PTI, CRI. For example, HARQ-ACK and/or SR may be transmitted in a first PUCCH component, and other PUCCH components may be used for other UCI transmission. In another example, UCI which may be critical to system performance such as HARQ-ACK and/or SR may be mapped to middle PUCCH components (e.g., within the hop dwell time if frequency hopping is used) to minimize impact due to transient period (e.g., especially if the transient period is a significant fraction of the OFDM/SC-FDMA symbol period). In another example, transient periods may be defined such that an amount of overlap between the transient period and PUCCH component carrying critical UCI such as HARQ-ACK is minimized or avoided.

Second factor: delay between downlink data (e.g., PDSCH) reception and corresponding acknowledgement (e.g., HARQ-ACK) transmission on UL. For example, if the delay is less than or equal to X OFDM symbols (e.g., X = 7), then HARQ-ACK may be transmitted in the PUCCH component towards an end of the PUCCH duration (e.g., last PUCCH component of the PUCCH, for example to give a remote unit 102 enough processing time to decode the PDSCH and prepare the HARQ-ACK for UL transmission), otherwise HARQ-ACK may be transmitted towards a beginning of the PUCCH duration (e.g., first PUCCH component of PUCCH is used for HARQ-ACK, for example to give a base unit 104 processing time to decode the HARQ-ACK and prepare a DL scheduling assignment to schedule the next DL data transmission to the UE in the next slot).

Third factor: number of reference signal ("RS") symbols in a PUCCH component. For example, a PUCCH component with more RS symbols may be mapped to a beginning of the PUCCH to reduce delay in channel estimation processing and improve channel estimate.

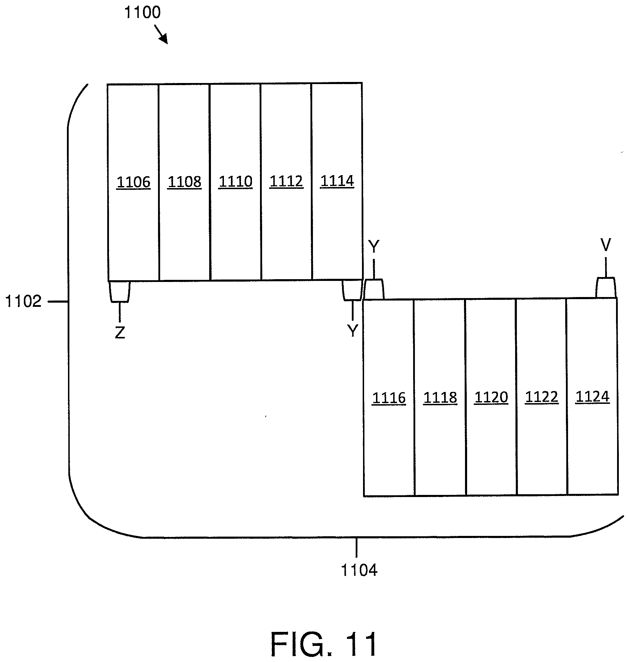

Fourth factor: length or # of symbols including a PUCCH component. For example, a PUCCH component with a larger number of symbols may be mapped towards edges of the PUCCH duration (e.g., first and/or last PUCCH component of the PUCCH) or towards the edges of the frequency hopping dwell period to minimize the impact of any transient period (e.g., partial symbol corruption due to presence of transient period) or OFDM/SC-FDMA symbol truncation due to presence of another signal or channel (e.g., the last symbol of PUCCH is truncated). For example, Figure 11 shows NR-PUCCH of length-10 symbol duration with frequency hopping formed by concatenation of two length-5 PUCCH components, each PUCCH length-5 component formed by concatenation of a length-2 PUCCH sub-component and a length-3 PUCCH sub-component. The longer length-3 PUCCH subcomponent may be a last component of the PUCCH. In some examples, with more than one symbol truncation, symbols of the last PUCCH component may be truncated with least important or lowest priority UCI type mapped to the last PUCCH component. In another example, the truncation symbols may be distributed across multiple PUCCH components (i.e., truncating at least one symbol from more than one PUCCH component) rather than all truncation in the last PUCCH component with limitations on the truncation or no truncation on PUCCH component that carry HARQ-ACK.

Figure 11 is a schematic block diagram illustrating yet another embodiment of a combination of PUCCH components. A combination PUCCH component 1100 (e.g., NR-PUCCH) with 10 symbol duration with frequency hopping is illustrated. The combination PUCCH component 1100 is transmitted over a frequency 1102 and a time 1104. The combination PUCCH component 1100 includes a first symbol 1106, a second symbol 1108, a third symbol 1110, a fourth symbol 1112, and a fifth symbol 1114 transmitted over a first PRB (e.g., PRB 40), and a sixth symbol 1116, a seventh symbol 1118, an eighth symbol 1120, a ninth symbol 1122, and a tenth symbol 1124 transmitted over a second PRB (e.g., PRB 5). The duration of the first, second, third, fourth, and fifth symbols 1106, 1108, 1110, 1112, and 1114, transmitted over the first PRB corresponds to one dwell period. Similarly, the duration of the sixth, seventh, eighth, ninth, and tenth symbols 1116, 1118, 1120, 1122, and 1124 transmitted over the second PRB corresponds to another dwell period. The first, second, third, fourth, fifth, sixth, seventh, eighth, ninth, and tenth symbols 1106, 1108, 1110, 1112, 1114, 1116, 1118, 1120, 1122, and 1124 use a number of RBs (e.g., 1). In one embodiment, a first component includes the first symbol 1106, the second symbol 1108, the third symbol 1110, the fourth symbol 1112, and the fifth symbol 1114. Moreover, a second component includes the sixth symbol 1116, the seventh symbol 1118, the eighth symbol 1120, the ninth symbol 1122, and the tenth symbol 1124. The first and second components may have one of the configurations described in Figure 9. For example, the first symbol 1106 may be data, the second symbol 1108 may be a RS, the third symbol 1110 may be data, the fourth symbol 1112 may be a RS, the fifth symbol 1114 may be data, the sixth symbol 1116 may be data, the seventh symbol 1118 may be a RS, the eighth symbol 1120 may be data, the ninth symbol 1122 may be a RS, and the tenth symbol 1124 may be data. As may be appreciated, other possibilities for the combination PUCCH component 1100 exist.

In one example, when a HARQ-ACK is communicated together with other UCI information on PUCCH, HARQ-ACK symbols may puncture the other UCI information on symbols (or PUCCH component) used for HARQ-ACK transmission. For example, in Figure 11 within a hop dwell time, other UCI (e.g., CQI/PMI) is channel-coded and rate-matched to transmit on the 3 data symbols (e.g., OFDM/SC-FDMA symbols 0, 2, 4 corresponding to symbols 1106, 1110, and 1114). When HARQ-ACK is not transmitted, channel-coded CQI/PMI is mapped to OFDM/SC-FDMA symbols 0, 2, 4 (e.g., numbering beginning from 0) corresponding to symbols 1106, 1110, and 1114. When HARQ-ACK is to be transmitted (in response to receiving DL data (e.g., PDSCH)), channel-coded CQI/PMI that would be mapped to symbol 0 corresponding to symbol 1106 may be punctured and HARQ-ACK is mapped to OFDM/SC-FDMA symbol 0 (e.g., in a 2-symbol PUCCH component) corresponding to symbol 1106, with CQI/PMI that may be mapped to OFDM/SC-FDMA symbols 2, 4 if HARQ-ACK is not transmitted is mapped and transmitted on the same OFDM/SC-FDMA symbols 2, 4 corresponding to symbols 1110 and 1114. In one embodiment, the mapping of other UCI (e.g., CQI/PMI) may start from data symbols in a second PUCCH component (e.g., symbols 2, 4 corresponding to symbols 1110 and 1114 belonging to 3-symbol PUCCH component in Figure 5) and then mapped to the data symbols in first PUCCH component - the PUCCH component that would be used HARQ-ACK if HARQ-ACK is present (e.g., symbol 0 corresponding to symbol 1106 belonging to 2-symbol PUCCH component in Figure 11), so mapping symbol order of 2, 4, 0 corresponding to symbols 1110, 1114, and 1106 to avoid puncturing of systematic bits when HARQ-ACK is present on PUCCH.

In one example, a remote unit 102 may be configured by higher layers (e.g., a layer above a physical layer), the PUCCH component format (e.g., # of OFDM/SC-FDMA symbols in PUCCH component, and/or RS/data pattern) to use for HARQ-ACK when communicated together with other UCI information on PUCCH. In another example, the PUCCH component format (e.g., # of OFDM/SC-FDMA symbols in PUCCH component, and/or RS/data pattern) may be based on the number of activated (or configured) component carriers or serving cells in a group (e.g., dual connectivity group) whose PUCCH signaling (UCI) is communicated on the PUCCH.

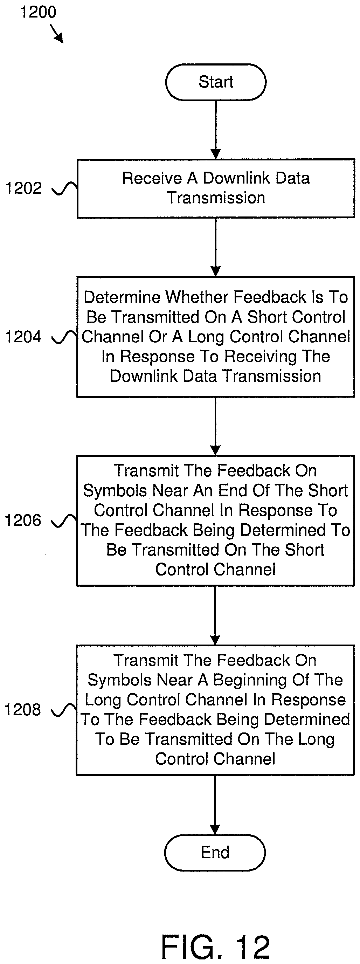

Figure 12 is a schematic flow chart diagram illustrating one embodiment of a method 1200 for transmitting feedback. In some embodiments, the method 1200 is performed by an apparatus, such as the remote unit 102. In certain embodiments, the method 1200 may be performed by a processor executing program code, for example, a microcontroller, a microprocessor, a CPU, a GPU, an auxiliary processing unit, a FPGA, or the like.

The method 1200 may include receiving 1202 a downlink data transmission. In certain embodiments, the method 1200 includes determining 1204 whether feedback is to be transmitted on a short control channel or a long control channel in response to receiving the downlink data transmission. In some embodiments, the method 1200 includes transmitting 1206 the feedback on symbols near an end of the short control channel in response to the feedback being determined to be transmitted on the short control channel. In various embodiments, the method 1200 includes transmitting 1208 the feedback on symbols near a beginning of the long control channel in response to the feedback being determined to be transmitted on the long control channel.

In one embodiment, the method 1200 includes receiving configuration information indicating whether to transmit feedback on the short control channel or the long control channel, and transmitting feedback based on the configuration information. In a further embodiment, the long control channel includes a first component and a second component, the first component includes a first number of symbols, the second component includes a second number of symbols, and the first component is temporally before the second component. In certain embodiments, the method 1200 includes transmitting other uplink control information on the second component, wherein the other uplink control information includes uplink control information that excludes feedback in response to the received downlink data transmission. In various embodiments, the method 1200 includes receiving configuration information indicating feedback to be transmitted on the first component.

In certain embodiments, the method 1200 includes determining a component on which feedback is transmitted based on a number of activated component carriers for which the feedback is transmitted on the long control channel. In some embodiments, the downlink data transmission includes data for at least one transport block, the at least one transport block is segmented into multiple code blocks with a first code block group including a first number of the multiple code blocks and a second code block group including a second number of the multiple code blocks, at least a portion of downlink data for the first code block group is received temporally before the downlink data for a second code block group, feedback for the first code block group is transmitted in the first component of the long control channel, and feedback for the second code block group is transmitted in the second component of the long control channel. In various embodiments, the transport block is mapped to a codeword, and the codeword is received on one or more spatial layers of the downlink data transmission.

In one embodiment, the method 1200 includes receiving a downlink scheduling assignment message in a control channel scheduling the downlink data transmission, wherein the downlink scheduling assignment message includes an indication of a delay between downlink data reception and corresponding feedback, and determining whether feedback is to be transmitted on the short control channel or the long control channel in response to receiving the indication of the delay. In certain embodiments, the method 1200 includes determining that the feedback is to be transmitted on the short control channel in response to the delay being less than or equal to a first number of symbols and determining that the feedback is to be transmitted on the long control channel in response to the delay being greater than a first number of symbols. In various embodiments, the short control channel includes a first set of symbols and a second set of symbols, the second set of symbols occurring after the first set of symbols, and transmitting the feedback includes transmitting the feedback on the second set of symbols. In some embodiments, the method 1200 includes determining whether feedback is to be transmitted on a short control channel or a long control channel based on a number of code blocks, a number of code block groups, a number of transport blocks, or some combination thereof in the received downlink data transmission.

In certain embodiments, a mapping of the other uplink control information is such that the feedback punctures the other uplink control information on the first component. In various embodiments, the second number of symbols is greater than the first number of symbols. In some embodiments, the method 1200 includes determining a component on which feedback is transmitted based on a number of configured component carriers for which the feedback is transmitted on the long control channel. In one embodiment, a method 1200 includes determining a component on which feedback is transmitted based on a number of serving cells for which the feedback is transmitted on the long control channel.

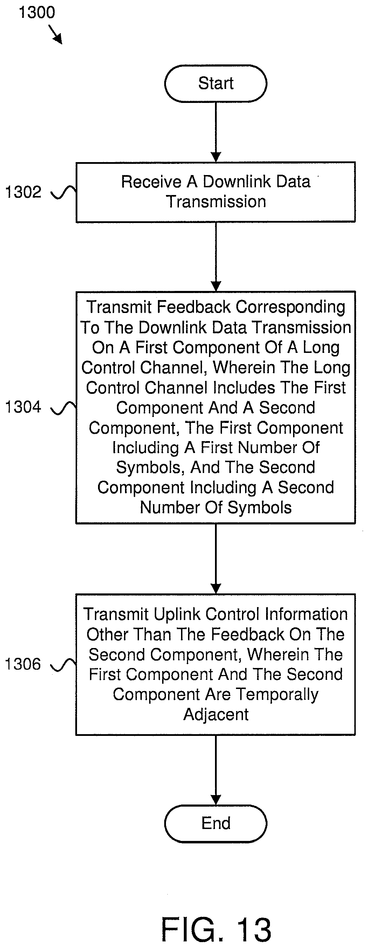

Figure 13 is a schematic flow chart diagram illustrating one embodiment of a method 1300 for transmitting components. In some embodiments, the method 1300 is performed by an apparatus, such as the remote unit 102. In certain embodiments, the method 1300 may be performed by a processor executing program code, for example, a microcontroller, a microprocessor, a CPU, a GPU, an auxiliary processing unit, a FPGA, or the like.

The method 1300 may include receiving 1302 a downlink data transmission. In some embodiments, the method 1300 includes transmitting 1304 feedback corresponding to the downlink data transmission on a first component of a long control channel, wherein the long control channel includes the first component and a second component, the first component includes a first number of symbols, and the second component includes a second number of symbols. In various embodiments, the method 1300 includes transmitting 1306 uplink control information other than the feedback on the second component, wherein the first component and the second component are temporally adjacent.

In one embodiment, the method 1300 includes receiving information indicating a supported component format via signaling, and determining formats of the first and second components based on the information. In certain embodiments, the formats of the first and second components are determined by a time domain duration in terms of a number of symbols, a frequency bandwidth in terms of a number of physical resource blocks, a reference signal density and pattern, a numerology, a payload size, an uplink control information type, or some combination thereof. In various embodiments, the reference signal density and pattern is numerology dependent, subcarrier spacing dependent, or some combination thereof. In some embodiments, the method includes determining a transmission order of the first and second components in time based on a configured transmission priority order, an uplink control information type, or some combination thereof.

In certain embodiments, the method 1300 includes truncating a first portion of symbols of the first and second components based on a difference between a total number of symbols and an available number of symbols. In various embodiments, the method 1300 includes determining to keep a second portion of symbols of the first and second components in a current slot, and moving the first portion of symbols to a next available slot. In some embodiments, determining to keep the second portion of symbols of the first and second components in the current slot, and move the first portion of symbols to the next available slot is based on a configured value, the total number of symbols, the available number of symbols, or some combination thereof.

In one embodiment, the method 1300 includes determining to remove at least one symbol of the first portion of symbols. In certain embodiments, determining to remove the at least one symbol of the first portion of symbols is based on a configured value, the total number of symbols, the available number of symbols, or some combination thereof. In some embodiments, the method 1300 includes determining to merge at least one symbol of the first portion of symbols with another component. In various embodiments, determining to merge the at least one symbol of the first portion of symbols with another component is based on a configured value, the total number of symbols, the available number of symbols, or some combination thereof.

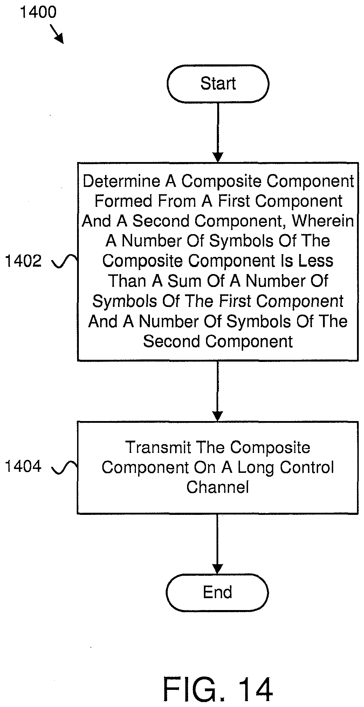

Figure 14 is a schematic flow chart diagram illustrating another embodiment of a method 1400 for transmitting components. In some embodiments, the method 1400 is performed by an apparatus, such as the remote unit 102. In certain embodiments, the method 1400 may be performed by a processor executing program code, for example, a microcontroller, a microprocessor, a CPU, a GPU, an auxiliary processing unit, a FPGA, or the like.

The method 1400 may include determining 1402 a composite component formed from a first component and a second component, wherein a number of symbols of the composite component is less than a sum of a number of symbols of the first component and a number of symbols of the second component. In certain embodiments, the method 1400 includes transmitting 1404 the composite component on a long control channel.

In one embodiment, the method 1400 includes dropping at least one symbol of the second component, wherein the number of symbols of the composite component is equal to a sum of the number of symbols of the first component and a number of remaining symbols of the second component. In some embodiments, the at least one dropped symbol of the second component includes a reference signal. In certain embodiments, the composite component is transmitted on the long control channel in a first slot, and the at least one dropped symbol of the second component is transmitted on an other control channel in a second slot. In one embodiment, the other control channel may be a short control channel or a long control channel.

The scope of the invention is solely limited by the appended claims.

## Claims

1. A method comprising:
receiving (1202) a downlink data transmission;
receiving a downlink scheduling assignment message in a control channel scheduling the downlink data transmission, wherein the downlink scheduling assignment message comprises an indication of a delay between downlink data reception and corresponding feedback;
determining (1204) whether feedback is to be transmitted on a short control channel or a long control channel in response to receiving the indication of the delay;
determining that the feedback is to be transmitted on the short control channel in response to the delay being less than or equal to a first number of symbols and determining that the feedback is to be transmitted on the long control channel in response to the delay being greater than a first number of symbols;
transmitting (1206) the feedback on symbols at an end of a slot of the short control channel in response to the feedback being determined to be transmitted on the short control channel; and
transmitting (1208) the feedback on symbols at a beginning of a slot of the long control channel in response to the feedback being determined to be transmitted on the long control channel.

2. The method of claim 1, further comprising receiving configuration information indicating whether to transmit feedback on the short control channel or the long control channel, and transmitting feedback based on the configuration information.

3. The method of claim 1, wherein the long control channel comprises a first component and a second component, the first component comprising a first number of symbols, the second component comprising a second number of symbols, and the first component is temporally before the second component.

4. The method of claim 3, further comprising transmitting other uplink control information on the second component, wherein the other uplink control information comprises uplink control information that excludes feedback in response to the received downlink data transmission.

5. The method of claim 3, further comprising determining a component on which feedback is transmitted based on a number of activated component carriers for which the feedback is transmitted on the long control channel.

6. The method of claim 3, wherein the downlink data transmission comprises data for at least one transport block, the at least one transport block is segmented into a plurality of code blocks with a first code block group comprising a first number of the plurality of code blocks and a second code block group comprising a second number of the plurality of code blocks, at least a portion of downlink data for the first code block group is received temporally before the downlink data for a second code block group, feedback for the first code block group is transmitted in the first component of the long control channel, and feedback for the second code block group is transmitted in the second component of the long control channel.

7. The method of claim 1,
wherein the short control channel comprises a first set of symbols and a second set of symbols, the second set of symbols occurring after the first set of symbols, and transmitting the feedback comprises transmitting the feedback on the second set of symbols.

8. The method of claim 1, further comprising determining whether feedback is to be transmitted on a short control channel or a long control channel based on a number of code blocks, a number of code block groups, a number of transport blocks, or some combination thereof in the received downlink data transmission.

## Patentansprüche

1. Verfahren, umfassend:
Empfangen (1202) einer Downlink-Datenübertragung;
Empfangen einer Downlink-Zeitplanzuweisungsnachricht in einem Steuerkanalzeitplan der Downlink-Datenübertragung, wobei die Downlink-Zeitplanzuweisungsnachricht eine Angabe einer Verzögerung zwischen Downlink-Datenempfang und entsprechender Rückmeldung umfasst;
Bestimmen (1204), ob eine Rückmeldung auf einem kurzen Steuerkanal oder einem langen Steuerkanal als Reaktion auf das Empfangen der Angabe der Verzögerung übertragen werden soll;
Bestimmen, dass die Rückmeldung auf dem kurzen Steuerkanal als Reaktion darauf übertragen werden soll, dass die Verzögerung kleiner als oder gleich einer ersten Anzahl von Symbolen ist und Bestimmen, dass die Rückmeldung auf dem langen Steuerkanal als Reaktion darauf übertragen werden soll, dass die Verzögerung größer als eine erste Anzahl von Symbolen ist;
Übertragen (1206) der Rückmeldung an Symbolen an einem Ende eines Schlitzes des kurzen Steuerkanals als Reaktion darauf, dass bestimmt wird, dass die Rückmeldung auf dem kurzen Steuerkanal übertragen werden soll; und
Übertragen (1208) der Rückmeldung an Symbolen zu einem Anfang eines Schlitzes des langen Steuerkanals als Reaktion darauf, dass bestimmt wird, dass die Rückmeldung auf dem langen Steuerkanal übertragen werden soll.

2. Verfahren nach Anspruch 1, ferner umfassend das Empfangen von Konfigurationsinformationen, die angeben, ob eine Rückmeldung auf dem kurzen Steuerkanal oder dem langen Steuerkanal übertragen werden soll, und Übertragen einer Rückmeldung basierend auf den Konfigurationsinformationen.

3. Verfahren nach Anspruch 1, wobei der lange Steuerkanal eine erste Komponente und eine zweite Komponente umfasst, die erste Komponente umfassend eine erste Anzahl von Symbolen, die zweite Komponente umfassend eine zweite Anzahl von Symbolen und wobei die erste Komponente zeitlich vor der zweiten Komponente liegt.

4. Verfahren nach Anspruch 3, ferner umfassend das Übertragen anderer Uplink-Steuerinformationen auf der zweiten Komponente, wobei die anderen Uplink-Steuerinformationen Uplink-Steuerinformationen umfassen, die eine Rückmeldung als Reaktion auf die empfangene Downlink-Datenübertragung ausschließen.

5. Verfahren nach Anspruch 3, ferner umfassend das Bestimmen einer Komponente, auf der eine Rückmeldung übertragen wird, basierend auf einer Anzahl von aktivierten Komponententrägern, für die die Rückmeldung auf dem langen Steuerkanal übertragen wird.

6. Verfahren nach Anspruch 3, wobei die Downlink-Datenübertragung Daten für mindestens einen Transportblock umfasst, wobei der mindestens eine Transportblock in eine Vielzahl von Codeblöcken segmentiert ist, eine erste Codeblockgruppe umfassend eine erste Anzahl der Vielzahl von Codeblöcken, und eine zweite Codeblockgruppe umfassend eine zweite Anzahl der Vielzahl von Codeblöcken, wobei mindestens ein Anteil von Downlink-Daten für die erste Codeblockgruppe zeitlich vor den Downlink-Daten für eine zweite Codeblockgruppe empfangen wird, wobei eine Rückmeldung für die erste Codeblockgruppe in der ersten Komponente des langen Steuerkanals übertragen wird und eine Rückmeldung für die zweite Codeblockgruppe in der zweiten Komponente des langen Steuerkanals übertragen wird.

7. Verfahren nach Anspruch 1,
wobei der kurze Steuerkanal einen ersten Satz von Symbolen und einen zweiten Satz von Symbolen umfasst, wobei der zweite Satz von Symbolen nach dem ersten Satz von Symbolen auftritt, und das Übertragen der Rückmeldung das Übertragen der Rückmeldung auf dem zweiten Satz von Symbolen umfasst.

8. Verfahren nach Anspruch 1, ferner umfassend das Bestimmen, ob eine Rückmeldung auf einem kurzen Steuerkanal oder einem langen Steuerkanal basierend auf einer Anzahl von Codeblöcken, einer Anzahl von Codeblockgruppen, einer Anzahl von Transportblöcken oder einer Kombination davon in der empfangenen Downlink-Datenübertragung übertragen werden soll.

## Revendications

1. Procédé comprenant :
la réception (1202) d'une transmission de données de liaison descendante ;
la réception d'un message d'attribution de planification de liaison descendante dans un canal de commande ordonnant la transmission de données de liaison descendante, le message d'attribution de planification de liaison descendante comprenant une indication d'un retard entre la réception de données de liaison descendante et la rétroaction correspondante ;
la détermination (1204) du fait de savoir si une rétroaction doit être transmise sur un canal de commande court ou un canal de commande long en réponse à la réception de l'indication du retard ;
la détermination que la rétroaction doit être transmise sur le canal de commande court en réponse au retard étant inférieur ou égal à un premier nombre de symboles et la détermination que la rétroaction doit être transmise sur le canal de commande long en réponse au retard étant supérieur à un premier nombre de symboles ;
la transmission (1206) de la rétroaction sur des symboles à une fin d'un intervalle du canal de commande court en réponse au fait que la rétroaction est déterminée comme étant transmise sur le canal de commande court ; et
la transmission (1208) de la rétroaction sur des symboles au début d'un intervalle du canal de commande long en réponse au fait que la rétroaction est déterminée comme étant transmise sur le canal de commande long.

2. Procédé selon la revendication 1, comprenant en outre la réception d'informations de configuration indiquant s'il faut transmettre une rétroaction sur le canal de commande court ou le canal de commande long, et la transmission d'une rétroaction sur la base des informations de configuration.

3. Procédé selon la revendication 1, dans lequel le canal de commande long comprend un premier composant et un second composant, le premier composant comprenant un premier nombre de symboles, le second composant comprenant un second nombre de symboles, et le premier composant étant avant le second composant dans le temps.

4. Procédé selon la revendication 3, comprenant en outre la transmission d'autres informations de commande de liaison montante sur le second composant, dans lequel les autres informations de commande de liaison montante comprennent des informations de commande de liaison montante qui exclut une rétroaction en réponse à la transmission de données de liaison descendante reçues.

5. Procédé selon la revendication 3, comprenant en outre la détermination d'un composant sur lequel une rétroaction est transmise sur la base d'un nombre de supports de composants activés pour lesquels la rétroaction est transmise sur le canal de commande long.

6. Procédé selon la revendication 3, dans lequel la transmission de données de liaison descendante comprend des données pour au moins un bloc de transport, l'au moins un bloc de transport est segmenté en une pluralité de blocs de code avec un premier groupe de blocs de code comprenant un premier nombre de la pluralité de blocs de code et un second groupe de blocs de code comprenant un second nombre de la pluralité de blocs de code, au moins une partie des données de liaison descendante pour le premier groupe de blocs de code est reçue avant les données de liaison descendante dans le temps pour un second groupe de blocs de code, une rétroaction pour le premier groupe de blocs de code est transmise dans la première composante du canal de commande long, et une rétroaction pour le second groupe de blocs de code est transmise dans la second composante du canal de commande long.

7. Procédé selon la revendication 1,
dans lequel le canal de commande court comprend un premier ensemble de symboles et un second ensemble de symboles, le second ensemble de symboles se produisant après le premier ensemble de symboles, et la transmission de la rétroaction comprend la transmission de la rétroaction sur le second ensemble de symboles.

8. Procédé selon la revendication 1, comprenant en outre le fait de déterminer si une rétroaction doit être transmise sur un canal de commande court ou un canal de commande long sur la base d'un nombre de blocs de code, d'un nombre de groupes de blocs de code, d'un nombre de blocs de transport ou d'une certaine combinaison de ceux-ci dans la transmission de données de liaison descendante reçues.
